# EUROPEAN PATENT APPLICATION

(11) **EP 4 257 016 A1**
(43) Date of publication of application: **11.10.2023**
(21) Application number: 21923952.2
(22) Date of filing: 24.03.2021
(51) Int. Cl.: A47J 43/07, A47J 43/046

(54) **BLADE LOCKING STRUCTURE AND FOOD PROCESSOR**

(30) Priority: 05.02.2021 CN 202110160662
(71) Applicant: Kingclean Electric Green Technology (Suzhou) Co., Ltd., Suzhou, Jiangsu 215010 (CN)
(72) Inventor: LI, Xuefeng, Suzhou, Jiangsu 215010 (CN); TANG, Jiayuan, Suzhou, Jiangsu 215010 (CN); GUO, Juncheng, Suzhou, Jiangsu 215010 (CN)
(74) Representative: Hannke Bittner & Partner mbB Regensburg
(86) International application number: PCT/CN2021/082533
(87) International publication number: WO 2022/165943

(57) **Abstract**

The present disclosure provides a cutter locking structure (300) and a food processor (1000), and relates to the technical field of food processing tools. The cutter locking structure (300) includes a cutter locking member (301) configured to lock a cutter tool (200) on a pot body (101), where the cutter locking member (301) is provided with a locking cavity (3011), the locking cavity (3011) is configured to accommodate a cutter holder (201) of the cutter tool (200), and the cutter holder (201) is provided with protrusions (2011) extending radially outward; a support portion (302) is provided on a side of the cutter locking member (301) toward a pot opening of the pot body (101), and at least a part of the support portion (302) extends radially inward and beyond an edge of the locking cavity (3011); in response to a first state, the cutter locking member (301) is pressed on an external portion of a pot bottom (1011) of the pot body (101), the cutter tool (200) is locked on the pot body (101), and the support portion (302) is located above the protrusions (2011); and in response to a second state, the cutter locking member (301) is disengaged from the pot body (101), the support portion (302) is kept above the protrusions (2011), and the support portion (302) is capable of receiving the protrusions (2011) to support the cutter tool (200). By providing the support portion (302) on the side of the cutter locking member (301) toward the pot body (101) in the cutter locking structure (300), the support portion (302) supports the protrusions (2011), thereby supporting the cutter tool (200). This solves the problem that the cutter tool (200) tends to fall off directly.

## Description

### TECHNICAL FIELD

The present disclosure relates to the technical field of food processing tools, and in particular to a cutter locking structure and a food processor.

### BACKGROUND

At present, a multifunctional food processor is increasingly popular in markets. A cutter tool is provided in the food processor. By rotating the cutter tool, foods are shredded or stir-fried, etc. The food processor further has a heating function to better satisfy requirements of users. However, disassembly and assembly of the cutter tool in the food processor are most complained by the users. The cutter tool for shredding the foods is particularly sharp in most cases. Any careless operation of the cutter tool in disassembly and assembly will cause injuries to the users. For example, when the food processor is placed upside down to disassemble the cutter tool, the cutter tool tends to fall off directly as a cutter locking structure is unscrewed. Consequently, the sharp blade damages the table or accidentally wounds the skin causing poor experiences for the users.

### SUMMARY

The present disclosure provides a cutter locking structure, including a cutter locking member configured to lock a cutter tool on a pot body, where the cutter locking member is provided with a locking cavity, the locking cavity is configured to accommodate a cutter holder of the cutter tool, and the cutter holder is provided with protrusions extending radially outward; a support portion is provided on a side of the cutter locking member toward a pot opening of the pot body, and at least a part of the support portion extends radially inward and beyond an edge of the locking cavity; in response to a first state, the cutter locking member is pressed on an external portion of a pot bottom of the pot body, the cutter tool is locked on the pot body, and the support portion is located above the protrusions; and in response to a second state, the cutter locking member is disengaged from the pot body, the support portion is kept above the protrusions, and the support portion is capable of receiving the protrusions to support the cutter tool.

In an embodiment, a radially inward extending length of the support portion is between 0.2 cm and 0.5 cm. This improves a support force.

In an embodiment, a support force of the support portion is 20-40% greater than a gravity of the cutter tool. This improves a support force of the support portion for the cutter tool, and supports the cutter tool more stably.

In an embodiment, there are a plurality of the protrusions; the plurality of the protrusions are circumferentially spaced apart; the support portion includes a plurality of circumferentially spaced-apart support arms; and each protrusion corresponds to the support arm. By directly extending the support arms from the cutter locking member, the support arms are installed more reliably relative to the cutter locking member. Through a corresponding relationship between the support arms and the protrusions, the support portion can better support the cutter tool.

In an embodiment, there are a plurality of the protrusions; the plurality of the protrusions are circumferentially spaced apart; the side of the cutter locking member toward the pot opening is provided with a mounting groove; a sidewall of the mounting groove toward the locking cavity is provided with a plurality of notches; the support portion is configured as a support ring provided in the mounting groove; the support ring is provided with a plurality of circumferentially spaced-apart support arms; the support arms each extend radially inward through a corresponding one of the notches and beyond the edge of the locking cavity; and each protrusion corresponds to the support arm. The support ring with the support arms is cooperated with the mounting groove to support the cutter tool. Meanwhile, the mounting groove limits the support ring, such that the support ring is not misplaced easily relative to the cutter locking member, and the support ring is quickly assembled and changed.

In an embodiment, the sidewall of the mounting groove toward the locking cavity is provided with the notches; and the support arms extend radially inward through the notches and beyond the edge of the locking cavity. With the notches on the mounting groove, the support arms can extend to contact the protrusions on the cutter holder to support the cutter tool.

In an embodiment, there are a plurality of the notches; the plurality of the notches are spaced apart along a circumferential direction of the mounting groove; and at least one of the support arms extends through one of the notches. With the plurality of the notches, there are the corresponding support arms for the protrusions unlocked relative to the cutter locking member, thereby better supporting the cutter tool.

In an embodiment, an extending length of the notch along a circumferential direction of the cutter locking member is greater than or equal to an extending length of the support arm along the circumferential direction of the cutter locking member. Therefore, the support arms can extend smoothly through the notches to the locking cavity to support the cutter tool. Meanwhile, the support arms can be limited through the notches, namely the support arms are limited when rotating around an axis of the cutter locking member, thereby ensuring that the support arms can be always aligned with the corresponding protrusions.

In an embodiment, the support arm is capable of deforming deform elastically relative to the cutter locking member along an axial direction of the pot body. Therefore, the cutter tool on the support portion can be taken out smoothly relative to the pot body.

In an embodiment, a height of the support arm decreases gradually along a radially inward extension direction. The support arm deforms through a change in the height of the support arm, such that the cutter tool is completely disengaged relative to the pot body

In an embodiment, the support arm has an alternating gradient stiffness along the radially inwardly extension direction; and preferably, a side of the support arm close to the cutter locking member has a greater stiffness than that of a side of the support arm away from the cutter locking member. The support arm deforms through a change in the stiffness of the support arm, such that the cutter tool is completely disengaged relative to the pot body.

In an embodiment, a plurality of circumferentially spaced-apart locking oblique surfaces are arranged on an inner wall of the locking cavity; each of the locking oblique surfaces corresponds to one of the protrusions; when the cutter locking member is screwed relative to the pot body, the protrusion and the locking oblique surface are squeezed to each other, such that the cutter locking member is pressed on the external portion of the pot bottom of the pot body, and the cutter tool is locked on the pot body; and at least one of the support arms corresponds to a spacing between any adjacent ones of the locking oblique surfaces. The locking oblique surface and the protrusion are cooperated for cutter locking. Meanwhile, any two adjacent locking oblique surfaces are correspondingly provided therebetween with the support arm. The support arm is correspondingly provided for the protrusion withdrawn relative to the locking oblique surface, so as to better support the cutter tool in cutter disassembly.

In an embodiment, the cutter locking structure further includes a locking ring in the locking cavity; the locking ring moves synchronously with the cutter locking member; a plurality of circumferentially spaced-apart locking oblique surfaces are arranged on an inner wall of the locking ring; each of the locking oblique surfaces corresponds to one of the protrusions; when the cutter locking member is screwed relative to the pot body, the locking oblique surface and the protrusion are squeezed to each other, such that the cutter locking member under pushing of the locking ring is pressed on the external portion of the pot bottom of the pot body, and the cutter tool is locked on the pot body, thereby locking the cutter tool relative to the pot body; and at least one of the support arms corresponds to a spacing between any adjacent ones of the locking oblique surfaces. The cutter locking member and the locking ring are cooperated for cutter locking. Meanwhile, any two adjacent locking oblique surfaces are correspondingly provided therebetween with the support arm. The support arm is correspondingly provided for the protrusion withdrawn relative to the locking oblique surface, so as to better support the cutter tool in cutter disassembly.

In an embodiment, a height of the support ring along an axis of the cutter locking member is greater than or equal to a height of the mounting groove along the axis of the cutter locking member; and when the cutter locking member is locked relative to the pot body, the support ring comes in close contact with the pot bottom. With the support ring, when the blade is locked relative to the pot body, the support ring is pressed between the cutter locking member and the pot bottom. This not only increases a locking force of the cutter locking member on the cutter tool, but also reduces abrasion between the cutter locking member and the pot bottom.

In an embodiment, a first rough texture is provided on the support ring; and/or a second rough texture is provided on the support arm. With the rough texture, the frictional force of the support portion relative to the cutter locking member, the pot bottom and the protrusion can be increased.

In an embodiment, a first surface of the support arm contacting the protrusion to support the cutter tool is an oblique surface or a flat surface, and a second surface of the support arm opposite to the first surface is a flat surface or an oblique surface. This facilitates the disassembly and assembly of the cutter tool, and improves the support performance.

The present disclosure provides a food processor, including the cutter locking structure, and further including a base, where the pot body is provided on the base; the cutter locking structure is provided on the pot body; a motor is provided in the base; the motor is configured to drive a blade of the cutter tool to rotate; and at least a part of the cutter locking member extends out of a sidewall of the pot body.

The present disclosure has the following beneficial effects:
The cutter locking structure provided by the present disclosure includes a cutter locking member. The cutter locking member is configured to lock a cutter tool relative to a pot body. The cutter locking member is provided with a locking cavity. The locking cavity is configured to accommodate a cutter holder of the cutter tool. Protrusions extending radially outward are arranged on the cutter holder. A support portion is provided on a side of the cutter locking member toward a pot opening. At least a part of the support portion extends radially inward and beyond an edge of the locking cavity. In response to a first state, the cutter locking member is pressed on an external portion of a pot bottom of the pot body, the cutter tool is locked on the pot body, and the support portion is located above the protrusions. In response to a second state, the cutter locking member is disengaged from the pot body, the support portion is kept above the protrusions, and the support portion is capable of receiving the protrusions to support the cutter tool. When the pot body of the food processor is placed with the pot opening downward, and the cutter locking member is disengaged relative to the pot body, the cutter tool is in a cutter disassembly state or an incompletely locked state relative to the pot body under an action of the cutter locking member. When the locking force of the cutter locking member on the cutter tool decreases gradually, the cutter tool falls off relative to the cutter locking member along a direction toward the pot opening. In this case, the support portion is located under the protrusions, the protrusions on the cutter holder can contact the part of the support portion beyond the edge of the locking cavity, and the cutter tool is supported by the support portion. Therefore, the risk that the cutter tool is disengaged completely relative to the cutter locking member is lowered. In other words, by providing the support portion on the side of the cutter locking member toward the pot body in the cutter locking structure, the support portion supports the protrusions on the cutter holder in the cutter disassembly, thereby supporting the cutter tool. This solves the problem that the cutter tool tends to fall off directly in the cutter disassembly, lowers the risk that a blade in the cutter tool injuries or wounds the user, and achieves a higher safety and a better experience in use.

The food processor provided by the present disclosure includes the cutter locking structure, and further includes a base. The pot body is provided on the base. The cutter locking structure is provided on the pot body. A motor is provided in the base. The motor is configured to drive a blade of the cutter tool to rotate. The food processor processes foods conveniently, and can realize at least one of the above technical effects.

### BRIEF DESCRIPTION OF THE DRAWINGS

FIG. 1 is a first partial schematic view of a food processor provided by an embodiment of the present disclosure;
FIG. 2 is a second partial schematic view of a food processor provided by an embodiment of the present disclosure;
FIG. 3 is a first partial exploded view of a food processor provided by an embodiment of the present disclosure;
FIG. 4 is a second partial exploded view of a food processor provided by an embodiment of the present disclosure;
FIG. 5 is a bottom view of a food processor provided by an embodiment of the present disclosure;
FIG. 6 is a sectional view along A-A in FIG. 5;
FIG. 7 is a sectional view along B-B in FIG. 5;
FIG. 8 is a third partial exploded view of a food processor provided by an embodiment of the present disclosure;
FIG. 9 is a fourth partial exploded view of a food processor provided by an embodiment of the present disclosure;
FIG. 10 is a schematic view of a support portion in a cutter locking structure according to an embodiment of the present disclosure;
FIG. 11 is a first schematic view of a cutter locking structure according to an embodiment of the present disclosure;
FIG. 12 is a second schematic view of a cutter locking structure according to an embodiment of the present disclosure;
FIG. 13 is a third schematic view of a cutter locking structure according to an embodiment of the present disclosure; and
FIG. 14 is a partial schematic view illustrating cooperation between a cutter tool and a support portion according to an embodiment of the present disclosure.

### DETAILED DESCRIPTION

In the description of the present disclosure, it is to be understood that the terms "central", "longitudinal", "transverse", "length", "width", "thickness", "upper", "lower", "front", "back", "left", "right", "vertical", "horizontal", "top", "bottom", "inner", "outer", "clockwise", "anticlockwise", "axial", "radial" and "circumferential" etc. are orientations or positional relationships shown in the accompanying drawings. These terms may not be construed as a limitation to the present disclosure.

In addition, the terms such as "first" and "second" are used only for descriptive purposes, and should not be construed as indicating or implying relative importance or implying the number of indicated technical features. Thus, features limited by "first" and "second" may expressly or implicitly include at least one of that feature. In description of the present disclosure, "a plurality of means at least two, for example, two or three, unless otherwise clearly and specifically limited.

In the present disclosure, unless otherwise clearly specified, when it is described that a first feature is "above" or "below" a second feature, it indicates that the first and second features are in direct contact or the first and second features are in indirect contact through a medium. In addition, when it is described that the first feature is "over", "above" and "on" the second feature, it indicates that the first feature is directly or obliquely above the second feature, or simply indicates that an altitude of the first feature is higher than that of the second feature. When it is described that a first feature is "under", "below" or "beneath" a second feature, it indicates that the first feature is directly or obliquely under the second feature or simply indicates that the first feature is lower than the second feature.

It should be noted that when a component is "fixed" or "provided" on the other component, the component may be fixed on the other component directly or via an intermediate component. When a component is connected with the other component, the component may be connected with the other component directly or via an intermediate component. The terms "vertical", "horizontal", "upper", "lower", "left", "right" and other similar expressions used herein are for illustrative purposes only, rather than to mean the only implementation.

Functional performance of a food processor depends on a cutter tool therein. The performance of the cutter tool involves a shredding function of a blade for foods, and convenience in installation and operation of the cutter tool relative to a pot body. The blade for shredding the foods is particularly sharp in most cases. In disassembly and assembly of the cutter tool, it is important to prevent the sharp cutter tool from damaging the table or even injuring the user.

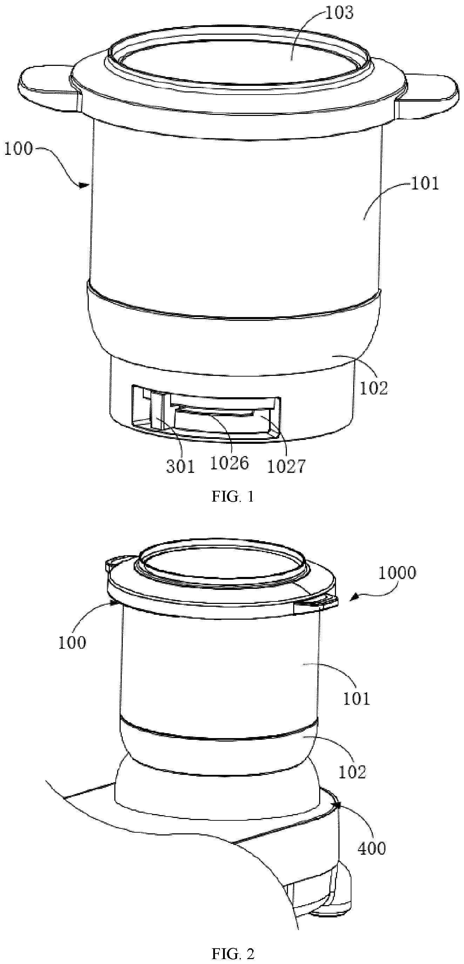

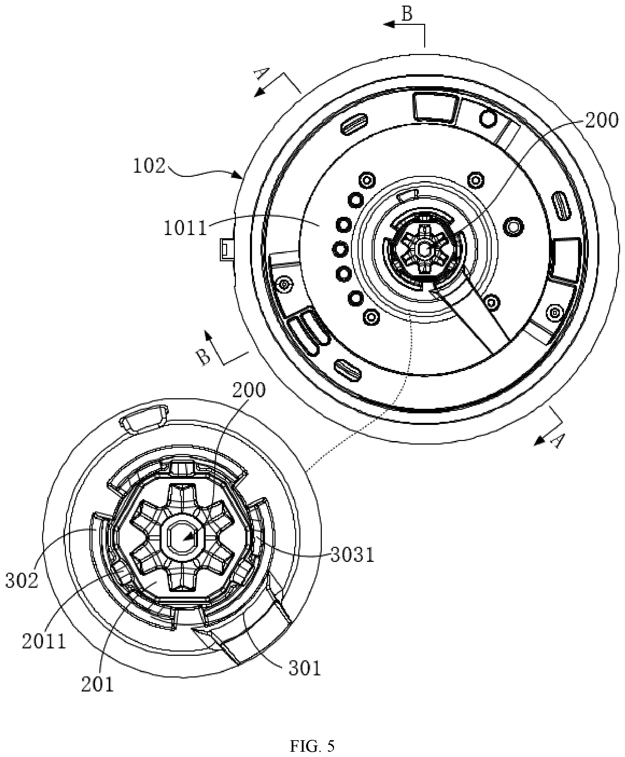

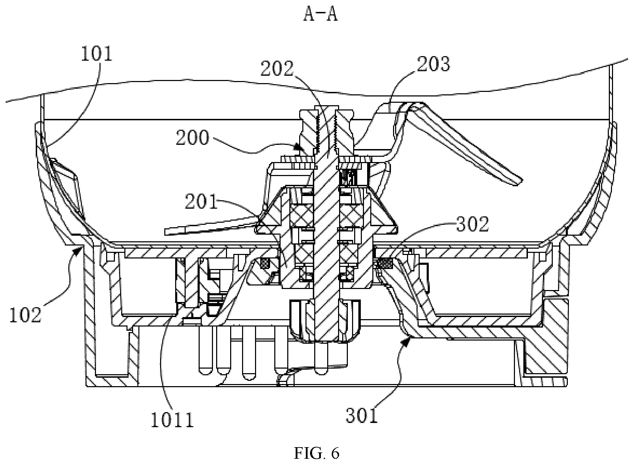

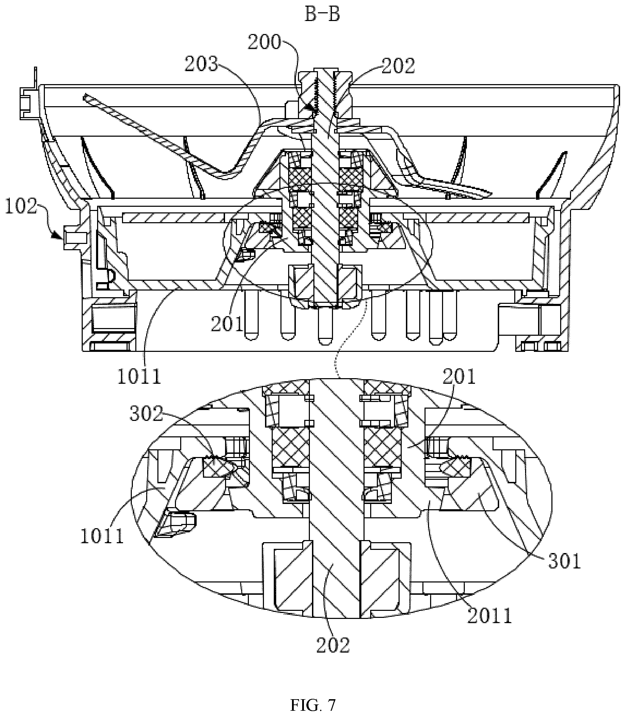

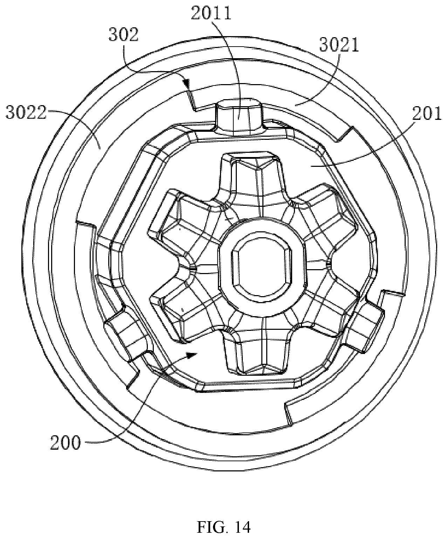

As shown in FIG. 1 to FIG. 14, an embodiment provides a food processor 1000, which is mainly used to shred and stir foods, or even heat the foods. The food processor 1000 includes a pot body 101, a cutter tool 200, and a cutter locking structure 300. The cutter locking structure 300 is provided at a bottom of the pot body 101 to lock the cutter tool 200 on the pot body 101. During disassembly of the cutter tool 200, the cutter locking structure 300 may further prevent the cutter tool 200 from falling off suddenly, which will be described below.

As shown in FIG. 1 to FIG. 7, a pot holder 102 is provided at the bottom of the pot body 101. The pot holder 102 is configured to support the pot body 101. Therefore, the pot body 101 can be stably placed on a table or mounted on a structure to be provided with the pot body 101. In other words, the pot body 101 and the pot holder 102 jointly form a food processing cup 100. The pot body 101 is provided with a food processing cavity for accommodating the foods. The cutter locking structure 300 is provided on a pot bottom 1011 of the pot body 101, and accommodated in the pot holder 102. A cutter assembly hole 1012 is formed in the pot bottom 1011 of the pot body 101. One end of the cutter tool 200 is cooperated with the cutter locking structure 300 through the cutter hole 1012. The food processing cup 100 further includes a cup lid 103 buckled on the pot body 101. The cup lid 103 is configured to seal a cup opening of the pot body 101. Meanwhile, a sidewall of the pot body 101 is further provided with a handle for the convenience of using.

As shown in FIG. 1 to FIG. 3, in some embodiments, the food processor 1000 further includes a base 400. The food processing cup 100 can be detachably connected to the base 400. A motor is provided in the base 400. When the food processing cup 100 is installed relative to the base 400, a cutter shaft 202 can be cooperated with a power output end of the motor in the base 400. Thus, the cutter shaft 202 rotates, and the cutter shaft 202 drives a blade 203 to operate. The pot bottom 1011 of the pot body 101 may further be provided with a heating element to realize a heating function of the food processor 1000. When the food processing cup 100 is seated in the base 400, the heating element on the pot body 101 can communicate with a power supply on the base 400. The heating element can heat food in the pot body 101. In other embodiments, the food processing cup 100 is fixed relative to the base 400 to improve the structural integrity of the food processor 1000.

The cutter locking structure 300 will be described below in detail.

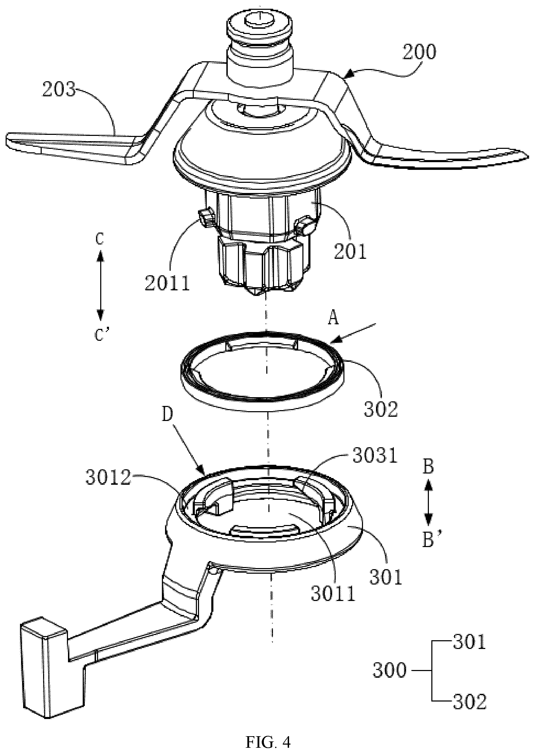

As shown in FIG. 4 to FIG. 14, the cutter locking structure 300 includes a cutter locking member 301. The cutter locking member 301 is configured to lock the cutter tool 200 on the pot body 101. The cutter locking member 301 is provided with a locking cavity 3011. The locking cavity 3011 is configured to accommodate a cutter holder 201 of the cutter tool 200. The cutter holder 201 is provided with protrusions 2011 extending radially outward. A support portion 302 is provided on a side of the cutter locking member 301 toward a pot opening. At least a part of the support portion 302 extends radially inward and beyond an edge of the locking cavity 3011. In response to a first state, the cutter locking member 301 is pressed on an external portion of the pot bottom 1011 of the pot body 101, the cutter tool 200 is locked on the pot body 101, and the support portion 302 is located above the protrusions 2011. In response to a second state, the cutter locking member 301 is disengaged from the pot body 101, the support portion 302 is kept above the protrusions 2011, and the support portion 302 is capable of receiving the protrusions 2011 to support the cutter tool 200. The first state refers to a state in which the cutter tool 200 is locked relative to the pot body 101 through the cutter locking member 301. The second state refers to a state in which the cutter tool 200 is disengaged relative to the pot body 101. The second state may be a cutter disassembly state, and may also be a state in which the cutter tool 200 is not locked relative to the pot body 101. In FIG. 4, C represents an upside, while C' represents a downside.

In a case where the pot body 101 is placed upside down (namely the pot opening faces toward the table), the cutter tool 200 tends to fall off relative to the pot body 101 along a direction toward the pot opening. In this case, the support portion 302 on the cutter locking member 301 supports the protrusions 2011 on the cutter holder 201, thereby reducing or even inhibiting a falling trend of the cutter tool 200. Therefore, the user can contact the cutter tool 200 safely and the cutter tool 200 does not damage the table or injure the user. For example, when the pot body 101 is placed upside down to disassemble the cutter tool 200 relative to the cutter locking structure 300, the cutter locking member 301 is rotated relative to the pot body 101. Consequently, the cutter locking member 301 is gradually disengaged relative to the pot body 101, the locking force of the cutter locking member 301 on the cutter tool 200 decreases gradually, and the cutter tool 200 tends to fall relative to the pot body 101 along the direction toward the pot opening. In this case, the support portion 302 is located under the protrusions 2011. The protrusions 2011 on the cutter holder 201 can contact the part of the support portion 302 beyond the edge of the locking cavity 3011, and are supported by the support portion 302. By supporting the cutter tool 200 with the support portion 302, the trend that the cutter tool 200 is directly disengaged relative to the cutter locking member 301 is effectively reduced, thereby lowering a potential safety hazard. In other words, by providing the support portion 302 on the side of the cutter locking member 301 toward the pot body 101 in the cutter locking structure 300, when the cutter tool 200 tends to fall off relative to the pot body 101 along the direction toward the pot opening, the support portion 302 supports the protrusions 2011 on the cutter holder 201, thereby supporting the cutter tool 200. This solves the problem that the cutter tool 200 tends to directly fall when disassembly, lowers the risk that the blade 203 in the cutter tool 200 is damaged or wounds the user, and achieves a higher safety and a better experience of the food processor 1000 in using.

As shown in FIG. 4 to FIG. 14, in some embodiments, there are a plurality of the protrusions 2011, and the plurality of the protrusions 2011 are spaced apart along a circumferential direction of the cutter holder 201. The support portion 302 includes a plurality of support arms 3021 spaced apart along a circumferential direction of the support portion. The protrusions 2011 correspond to the supporting arms 3021 respectively. According to this design, a contact area between the support portion 302 and the cutter holder 201 is increased. Along the circumferential direction of the cutter holder 201, there are structures contacting the support portion 302. Therefore, a force balance of the support portion 302 for the cutter holder 201 is improved, and the cutter tool 200 is better supported. Generally, the protrusions 2011 are in one-to-one correspondence with the support arms 3021.

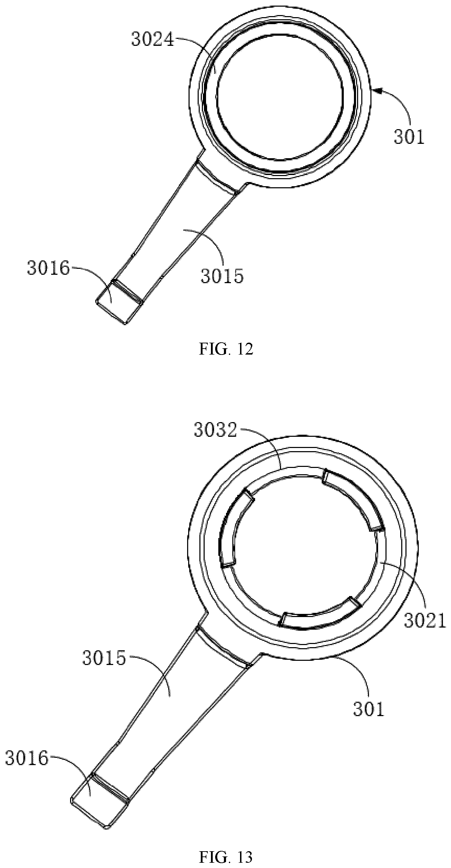

As shown in FIG. 13, in an embodiment, the support arms 3021 are directly provided on the cutter locking member 301. In some embodiments, the support arms 3021 are bonded on the cutter locking member 301 through an adhesive. For example, the support arms 3021 can be bonded on a wall of the locking cavity 3011 of the cutter locking member 301. Certainly, the support arms 3021 can be bonded on the side of the cutter locking member 301 toward the pot opening. Specifically, the side of the cutter locking member 301 toward the pot opening is provided with a plurality of support arms 3021 spaced apart along a circumferential direction of the cutter locking member. The support arms 3021 extend radially inward from a wall of the locking cavity 3011 to receive the protrusions 2011 on the cutter holder 201. A plurality of the protrusions 2011 spaced apart along the circumferential direction of the cutter holder are provided on an outer sidewall of the cutter holder 201. The protrusions 2011 extend radially outward from the outer sidewall of the cutter holder 201. Each protrusion 2011 corresponds to the support arm 3021. As described above, when the cutter tool 200 tends to fall off relative to the pot body 101 along the direction toward the pot opening, the protrusions 2011 are correspondingly supported by the support arms 3021 as the cutter tool 200 falls off toward the side of the pot opening, and thus the cutter tool 200 is better supported by the support portion 302.

As shown in FIG. 12, in another embodiment, a support ring 3024 is fixed on a top of the cutter locking member 301, for example, by bonding. The support ring 3024 extends radially inward and beyond the edge of the locking cavity 3011. Herein, the part of the support ring 3024 beyond the edge of the locking cavity 3011 functions to support the cutter tool and forms the support portion 302. It is ensured that the support portion 302 is provided for the protrusions 2011 on the cutter holder 201 in the circumference of the cutter locking member 301 to better support the cutter tool 200. In FIG. 4, the arrow D refers to the top of the cutter locking member 301.

In still another embodiment, a radial cross section of the support ring 3024 is a stepped structure. Namely, along a radially inward extension direction, a height of an extending tail end of the support ring 3024 is greater than a height of an end of the support ring 3024 connected to the cutter locking member 301. The end connected to the cutter locking member 301 serves as a first end of the support ring 3024, while the extending tail end of the support ring 3024 serves as a second end. A right angle is formed between the first end and the second end. The edge of the cutter locking member 301 is fittingly clamped at the right angle, such that the support ring 3024 is installed stably relative to the cutter locking member 301.

As shown in FIG. 4, FIG. 6, FIG. 7, FIG. 9 and FIG. 14, in still another embodiment, there are a plurality of the protrusions 2011 on the cutter holder 201. The plurality of the protrusions 2011 are spaced apart along a circumferential direction of the cutter holder 201. The side of the cutter locking member 301 toward the pot opening is provided with a mounting groove 3012. A sidewall of the mounting groove 3012 toward the locking cavity 3011 is provided with a plurality of notches 3013. The support portion 302 is configured as a support ring 3022 provided in the mounting groove 3012. The support ring 3022 is provided with a plurality of support arms 3021 that are spaced apart along a circumferential direction of the support ring. The support arms 3021 each extend radially inward through a corresponding one of the notches 3013 and beyond the edge of the locking cavity 3011. Each protrusion 2011 corresponds to the support arm 3021. The direction of the arrow A in FIG. 4 is the radially inward direction, and the BB' direction in FIG. 4 is the height direction of the mounting groove.

Specifically, an end of the cutter locking member 301 pressed with the pot bottom 1011 of the pot body 101 is provided with the mounting groove 3012. The mounting groove 3012 is an annular groove. The support ring 3022 is accommodated in the mounting groove 3012. While the support arms 3021 are limited by the notches 3013, the support ring 3022 does not cause mislocation and circumferential rotation easily relative to the cutter locking member 301. Therefore, each protrusion 2011 on the cutter holder 201 can be arranged on the corresponding support arm 3021 to better support the cutter tool 200. Meanwhile, since the support ring 3022 is accommodated in the mounting groove 3012, the support ring 3022 is assembled and changed quickly to obtain a higher installation efficiency. In addition, when the support portion 302 includes the support ring 3022 and the support arm 3021, the support ring 3022 and the support arm 3021 are formed integrally to make connection therebetween more reliable.

In other embodiment, a height of an inner annular side of the mounting groove 3012 and a height of an outer annular side of the mounting groove 3012 are not particularly limited. Optionally, the inner annular side of the mounting groove 3012 is as high as the outer annular side of the mounting groove. Alternatively, the inner annular side of the mounting groove 3012 is lower than the outer annular side of the mounting groove. Alternatively, the inner annular side of the mounting groove 3012 is higher than the outer annular side of the mounting groove.

In an embodiment, a radial extending length of the support arm 3021 is between 0.2 cm and 0.5 cm. The locking cavity 3011 generally has a diameter of 2 cm to 4 cm. According to experiments, the support arm 3021 with such a length supports the cutter tool 200 sufficiently, and the support arm 3021 has a small extending length in the locking cavity 3011 without an adverse effect on assembly and disassembly of the cutter tool 200. For example, with the above structure, the support force of the support portion 302 is 20-40% greater than the gravity of the cutter tool 200. Therefore, the support portion 302 can better support the cutter tool 200, the cutter tool 200 is supported more safely, and the cutter tool 200 does not fall off from the support portion 302. In some embodiments, the radial extending length of the support arm 3021 may be 0.2 cm, 0.3 cm, 0.35 cm, 0.46 cm and 0.5 cm, and the diameter of the locking cavity 3011 may be 2 cm, 3.6 cm and 4 cm. The specific values or even the scales in design are selected according to actual conditions.

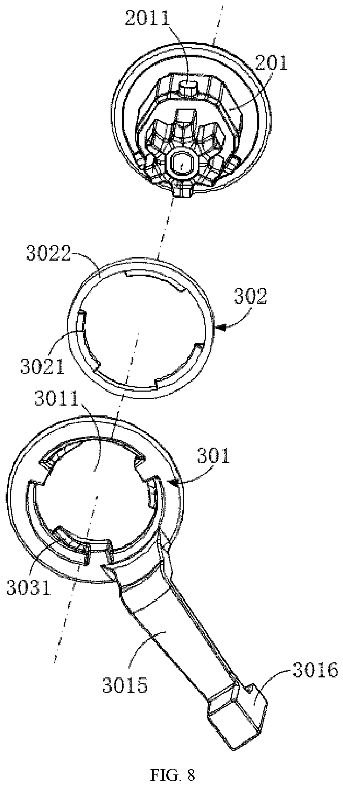

As shown in FIG. 8, in an embodiment, extending lengths of the notches 3013 along a circumferential direction of the cutter locking member 301 are greater than or equal to extending lengths of the support arms 3021 along the circumferential direction of the cutter locking member 301 respectively. When the extending lengths of the notches 3013 along the circumferential direction of the cutter locking member 301 are equal to the extending lengths of the support arms 3021 along the circumferential direction of the cutter locking member 301 respectively, the notches 3013 are in one-to-one correspondence with the support arms 3021. In this case, two sides of the support arms 3021 along the circumferential direction of the cutter locking member 301 fittingly contact two sidewalls of the notches 3013 along the circumferential direction of the mounting groove 3012. Therefore, not only are the support arms 3021 stretched out conveniently through the notches 3013, but also the protrusions 2011 located at the notches 3013 in disassembly of the cutter tool 200 are inevitably supported by the support arms 3021. This further makes the food processor safer in use. In other embodiments, if the extending lengths of the notches 3013 along the circumferential direction of the cutter locking member 301 are greater than the extending lengths of the support arms 3021 along the circumferential direction of the cutter locking member 301 respectively, the notches 3013 each can be used to stretching out two or more support arms 3021. As a matter of fact, a number of support arms 3021 correspondingly stretched out from each notch 3013 depends on an extending length between the support arm 3021 and the notch 3013, and can be set according to actual requirements.

As shown in FIG. 8, in an embodiment, the support ring 3022 is placed as high as the mounting groove 3012. Namely, when the support ring 3022 is accommodated in the mounting groove 3012, a top of the support ring 3022 is flush with a rabbet edge of the mounting groove 3012. In this case, when the cutter locking member 301 is locked relative to the pot body 101, the rabbet edge of the mounting groove 3012 is pressed and cooperated with the pot bottom 1011.

In other embodiments, the support ring 3022 is placed higher than the mounting groove 3012. When the cutter locking member 301 is screwed relative to the pot body 101, the support ring 3022 is also pressed between the cutter locking member 301 and the pot bottom 1011. Hence, the support ring 3022 functions as a gasket, such that the cutter locking member 301 and the cutter tool 200 are provided on the food processing cup stably.

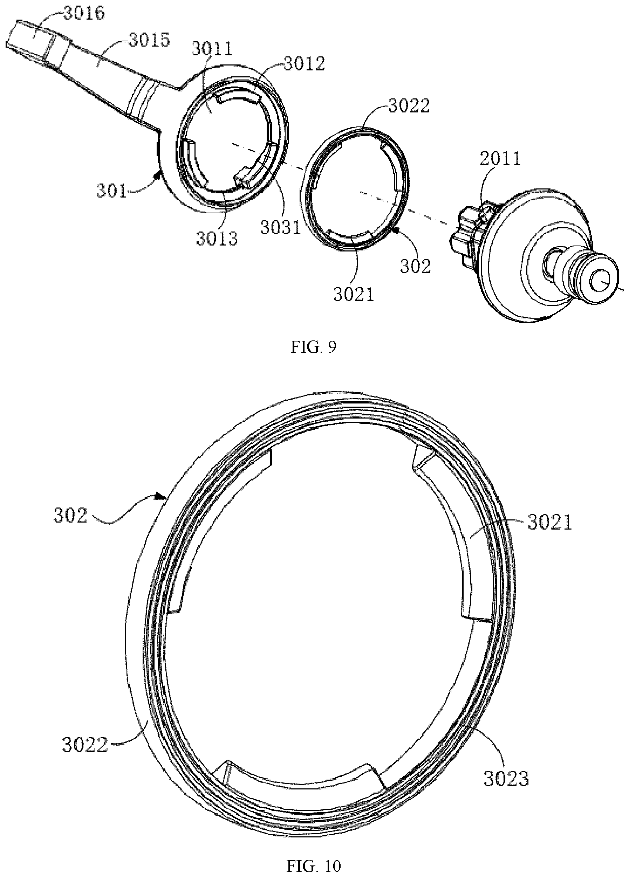

As shown in FIG. 8 and FIG. 9, in some embodiments, a first rough texture 3023 is provided on the support ring 3022, and a second rough texture is provided on the support arm 3021. In the case where the support ring 3022 is higher than the mounting groove 3012, when the cutter locking member 301 locks the cutter tool 200 relative to the pot body 101, the first rough texture 3023 increases a frictional force between the support ring 3022 and the pot bottom 1011. This is helpful for the cutter locking member 301 to lock the cutter tool 200. The second rough texture can increase a frictional force between the support arm 3021 and the protrusion 2011 to better support the cutter tool 200. The first rough texture 3023 and the second rough texture may be the same, and may also be different. In other embodiments, there may be only the first rough texture 3023 or the second rough texture. The manner employed should be contributed to assembly and disassembly of the support ring 3022, the cutter locking member 301 and the cutter tool 200.

As shown in FIG. 4 to FIG. 14, in some embodiments, the support arm 3021 is capable of deforming elastically relative to the cutter locking member 301 along an axial direction of the pot body 101. In response to disassembly of the cutter tool 200, the cutter tool may be pulled or pushed forcibly, such that the protrusion squeezes the support arm 3021 and forces the support arm 3021 to cause elastic deformation. Consequently, the protrusion is disengaged relative to the support arm 3021 to complete the disassembly of the cutter tool 200. In a specific embodiment, the support portion 302 (or the support arm 3021 and the support ring 0322) is made of a flexible material, such as rubber or silicone, to realize the elastic deformation of the support portion 302 (or the support arm 3021 and the support ring 0322). Meanwhile, as common gasket materials, the silicone and the rubber are low in cost and easy-to-get. In addition, when the support portion 302 includes the support ring 3022 and the support arm 3021, the support ring 3022 and the support arm 3021 are formed integrally to make connection therebetween more reliable.

In some embodiments, the support arm 3021 has an alternating gradient stiffness along the radially inward extension direction. For example, a starting point of the support arm 3021 along the radially inward extension direction serves as a first end, and a tail extending end serves as a second end. The first end has a maximum stiffness, while the second end has a minimum stiffness. There is an alternating gradient stiffness between the first end and the second end. For example, the stiffness in the direction from the first end to the second end decreases gradually, then increases gradually, and then decreases gradually. The alternating gradient stiffness can ensure that the support arm 3021 supports the protrusion 2011 or even the cutter tool 200 desirably in disassembly of the cutter tool 200. Moreover, the support arm 3021 does not deform for a large hardness, for the convenience of the disassembly of the cutter tool 200.

In other embodiments, a side of the support arm 3021 close to the cutter locking member 301 has a greater stiffness than that of a side of the support arm 3021 away from the cutter locking member 301. It can be ensured that the support arm 3021 supports the protrusion 2011 sufficiently. Moreover, the pressure of the protrusion 2011 on the support arm 3021 can be buffered, which reduces a damage to the support arm 3021 for collision between the protrusion 2011 and the support arm 3021.

As shown in FIG. 8 to FIG. 14, in some embodiments, the first surface of the support arm 3021 contacting the protrusion 2011 to support the cutter tool 200 is an oblique surface or a flat surface, and the second surface of the support arm opposite to the first surface is a flat surface or an oblique surface. The oblique surface facilitates cooperation with the cutter tool 200 to realize the disassembly and assembly of the cutter tool 200. With the flat surface, the cutter tool 200 is supported more stably. Preferably, a surface of the support arm 3021 for supporting the protrusion 2011 is a flat surface, while the other surface is an oblique surface. This improves the supporting effect and makes the cutter tool 200 assembled conveniently. Optionally, the first surface is the oblique surface extending obliquely downward along the radially inward direction, and the second surface is the oblique surface extending obliquely upward along the radially inward direction. As a result, the height of the support arm 3021 decreases gradually along the radially inward direction to prevent reverse installation of the support ring 3022. Moreover, the support arm 3021 has a desirable flexibility, such that the cutter tool 200 is taken out of the locking cavity 3011 smoothly.

In other embodiments, the height of the support arm 3021 may also be a stepped structure along the radially inward extension direction. The protrusion 2011 is blocked by a step when contacting the support arm 3021. This prevents automatic disengagement of the protrusion 2011 under the gravity of the cutter tool 200. For example, along the radially inward extension direction of the support arm 3021, the height of the support arm 3021 decreases slightly, then increases, and then decreases. The extending tail end of the support arm 3021 still has the minimum height, so as to achieve desirable deformation of the support arm 3021.

In some embodiments, the protrusion 2011 is configured to realize locking between the cutter tool 200 and the pot body. As shown in FIG. 4, FIG. 5, FIG. 8, FIG. 9 and FIG. 13, a plurality of circumferentially spaced-apart locking oblique surfaces 3031 are arranged on an inner wall of the locking cavity 3011. Each of the locking oblique surfaces 3031 corresponds to one of the protrusions 2011. When the cutter locking member 301 is screwed relative to the pot body 101, the protrusion 2011 and the locking oblique surface 3031 are squeezed to each other, such that the cutter locking member 301 is pressed on the external portion of the pot bottom 1011 of the pot body 101, and the cutter tool 200 is locked on the pot body 101. At least one of the support arms 3021 corresponds to a spacing 3032 between any adjacent ones of the locking oblique surfaces 3031.

For example, there are three protrusions 2011. The three protrusions 2011 are circumferentially spaced apart. There are also three locking oblique surfaces 3031. The three locking oblique surfaces 3031 are circumferentially spaced apart. Any two adjacent locking oblique surfaces 3031 are provided therebetween with a spacing 3032. With the spacing 3032, the protrusion 2011 is disengaged relative to the cutter locking member 301, namely the cutter tool 200 is disengaged relative to the cutter locking member 301. The support arm 3021 corresponds to the spacing 3032 between the any two adjacent locking oblique surfaces 3031. When the protrusion 2011 slips off the locking oblique surface 3031, the support arm 3021 receives the protrusion 2011 to support the cutter tool 200.

In actual use, when the cutter tool 200 is assembled relative to the pot body 101, the cutter holder 201 extends into the locking cavity 3011 of the cutter locking member 301 through the pot bottom 1011 of the pot body 101 and cross the support arm 3021, such that the protrusion 2011 on the cutter holder 201 is located above the locking oblique surface 3031. Thereafter, the cutter locking member 301 is rotated clockwise. The locking oblique surface 3031 and the protrusion 2011 are squeezed to each other, such that the cutter locking member 301 is pressed on the external portion of the pot bottom 1011 of the pot body 101, and the cutter locking member 301 squeezes the pot bottom 1011 of the pot body 101. Therefore, through the mutual cooperation relation between the locking oblique surface 3031, the protrusion 2011 and the pot bottom 1011 of the pot body 101, the cutter tool 200 is locked relative to the pot body 101. In this case, the support ring 3022 on the cutter locking member 301 is pressed between the cutter locking member 301 and the pot bottom 1011.

In cutter disassembly, the pot body 101 is placed upside down (namely the pot opening faces toward the table). When the cutter locking member 301 is rotated counterclockwise, the protrusion 2011 can be gradually disengaged from the locking oblique surface 3031. The locking force gradually decreases as the cutter locking member 301 rotates. The cutter tool 200 tends to fall off relative to the pot body 101 toward the pot opening. After the protrusion 2011 is disengaged from the locking oblique surface 3031, the protrusion 2011 falls onto the support arm 3021 and is supported on the support arm 3021. This prevents the cutter tool 200 from falling off, and lowers the potential safety hazard. It is to be understood that the cutter tool 200 can be taken out easily relative to the pot body 101 by applying a certain force, thereby realizing disassembly of the cutter tool 200.

The spacing 3032 between any adjacent locking oblique surfaces 3031 serves as a first spacing. A circumferential length of the support arm 3021 is the same as a circumferential length of the first spacing, such that any two adjacent locking oblique surfaces 3031 are correspondingly provided therebetween with one support arm 3021. After disengaged from the locking oblique surface 3031, the protrusion 2011 can directly fall onto the support arm 3021 to support the cutter tool 200.

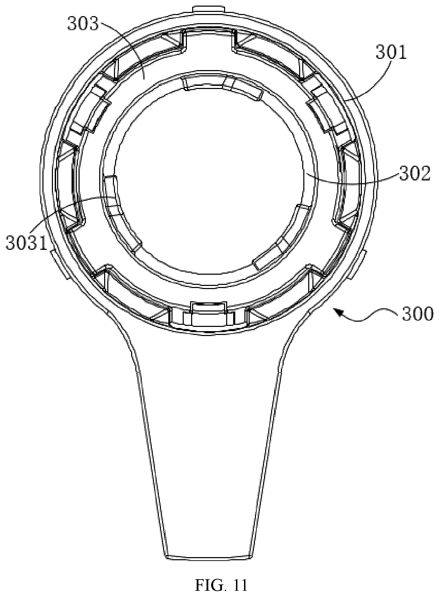

As shown in FIG. 11, in another embodiment, the cutter locking structure 300 further includes a locking ring 303 in the locking cavity 3011 of the cutter locking member 301. The locking ring 303 can rotate synchronously with the cutter locking member 301. A plurality of circumferentially spaced-apart locking oblique surfaces 3031 are arranged on an inner wall of the locking ring 303. The support ring 3022 is provided in the mounting groove 3012 of the cutter locking member 301. The support arm 3021 extends radially inward and beyond an edge of the locking ring 303. The spacing 3032 between any adjacent locking oblique surfaces 3031 serves as a second spacing. A circumferential length of the support arm 3021 is the same as a circumferential length of the second spacing, such that any two adjacent locking oblique surfaces 3031 are correspondingly provided therebetween with one support arm 3021.

Additionally, a radial extending length of the support arm 3021 is the same as a radial extending length of the locking oblique surface 3031. Therefore, after unlocked relative to the locking oblique surface 3031, the protrusion 2011 directly falls onto the corresponding support arm 3021 to support the cutter tool 200.

In actual use, when the cutter tool 200 is assembled relative to the pot body 101, the cutter holder 201 extends into the locking ring 303 through the pot bottom 1011 of the food processing cup 100 and cross the support arm 3021, such that the protrusion 2011 on the cutter holder 201 is located above the locking oblique surface 3031. Thereafter, the cutter locking member 301 is rotated clockwise. The locking ring 303 rotates synchronously with the cutter locking member 301. The locking oblique surface 3031 and the protrusion 2011 are squeezed to each other, such that the cutter locking member 301 squeezes the pot bottom 1011 of the pot body 101. Therefore, through the mutual cooperation relation between the locking oblique surface 3031, the protrusion 2011 and the pot bottom 1011 of the pot body 101, the cutter tool 200 is locked relative to the pot body 101. In this case, the support ring 3022 on the cutter locking member 301 is pressed between the cutter locking member 301 and the pot bottom 1011.

In cutter disassembly, the pot body 101 is placed upside down (namely the pot opening faces toward the table). When the cutter locking member 301 is rotated counterclockwise, the protrusion 2011 can be gradually disengaged from the locking oblique surface 3031. The locking force gradually decreases as the cutter locking member 301 rotates. The cutter tool 200 tends to fall off relative to the pot body 101 toward the pot opening. After the protrusion 2011 is disengaged from the locking oblique surface 3031, the protrusion 2011 falls onto the support arm 3021 and is supported on the support arm 3021. This prevents the cutter tool 200 from falling off, and lowers the potential safety hazard. It is to be understood that the cutter tool 200 can be taken out easily relative to the pot body 101 by applying a certain force, thereby realizing disassembly of the cutter tool 200.

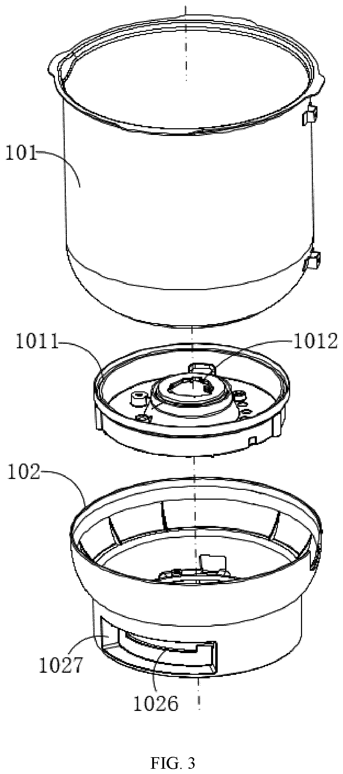

As shown in FIG. 3, FIG. 4 and FIG. 8, in another embodiment, the cutter holder 201 is a prismatic structure (such as a hexagonal prism). In this case, the cutter assembly hole 1012 on the pot body 101 is also a corresponding polygon (such as a hexagon). A mounting port adapted for the protrusion 2011 is provided on the cutter assembly hole 1012. When the cutter shaft 202 drives the blade 203 to rotate, the cutter holder 201 is cooperated with the polygonal cutter assembly hole 1012 to prevent rotation of the cutter holder 201. This easily solves the problem that the cutter holder 201 rotates with the cutter shaft 202, and simplifies the structure of the cutter tool 200. Meanwhile, the cutter tool 200 is assembled and disassembled only by aligning the protrusion 2011 with the mounting port, thereby greatly simplifying the assembly and disassembly of the cutter tool 200.

In an embodiment not shown, the protrusion 2011 may also not be configured to realize locking between the cutter tool 200 and the pot body, but prevents the rotation of the cutter holder 201. For example, a structure cooperated with the protrusion 2011 is provided on the pot holder 102, so as to inhibit the rotation of the cutter holder 201 when the cutter shaft 202 drives the blade 203 to rotate. In this case, a locking protrusion may be additionally provided on the cutter holder 201 to cooperate with the locking oblique surface 3031 on the cutter locking member 301, thereby realizing the cutter locking. Both the protrusion 2011 and the locking protrusion may contact the support arm 3021 and are supported by the support arm 3021 to prevent the cutter tool 200 from falling off directly.

To sum up, according to the cutter locking structure 300, by providing the support portion 302 on the cutter locking member 301, and through contact between the support portion 302 and the protrusion 2011 on the cutter holder 201, the cutter tool 200 is supported. This effectively prevents the cutter tool 200 from directly falling off relative to the cutter locking member 301. The support portion 302 is provided with the support arm 3021. The support arm 3021 has both support performance and deformation performance. While supporting the cutter tool 200, the support arm can provide convenience for the user through the deformation to disengage the cutter tool 200 relative to the cutter locking member 301.

As shown in FIGS. 1-13, in some embodiments, the cutter locking member 301 is provided with an extension arm 3015. The extension arm 3015 can extend out of a sidewall of the pot body 101. In an embodiment, a handle member 3016 is provided on an extending tail end of the extension arm 3015, such that the cutter locking member 301 is rotated through the handle member 3016. This rotates the cutter locking member 301 laterally and externally from the pot body 101. In another embodiment, an arc hole 1026 extending along a circumferential direction of the pot body 101 is formed in the sidewall of the pot body 101. The extension arm 3015 can rotate in the arc hole 1026. Preferably, an accommodating groove 1027 recessed radially inward is formed in the sidewall of the pot body 101. The arc hole 1026 is formed in a bottom of the accommodating groove 1027. The handle member 3016 is accommodated in the accommodating groove 1027, so as not to trigger the handle member 3016 accidentally to cause looseness of the cutter tool.

In cutter disassembly and assembly, the extending part (such as the handle member 3016) of the extension arm 3015 is held by the user from the sidewall of the pot body 101 to rotate the cutter locking member 301, thereby locking and unlocking the cutter tool 200. In this case, the cutter tool 200 can be disassembled and assembled without placing the pot body 101 upside down (namely the pot body 101 is placed upside). Therefore, the operation is more convenient, the problem that the cutter tool 200 falls off relative to the pot body 101 can be prevented, and the food processor is safer in use.

The above described are merely several embodiments of the present invention. Although these embodiments are described specifically and in detail, they should not be construed as a limitation to the patent scope of the present disclosure. It should be noted that those of ordinary skill in the art can further make several variations and improvements without departing from the concept of the present disclosure, and all of these fall within the protection scope of the present disclosure. Therefore, the protection scope of the present disclosure shall be subject to the protection scope defined by the claims.

## Claims

1. A cutter locking structure, comprising a cutter locking member (301) configured to lock a cutter tool (200) on a pot body (100), wherein
the cutter locking member (301) is provided with a locking cavity (3011), the locking cavity (3011) is configured to accommodate a cutter holder (201) of the cutter tool (200), and the cutter holder (201) is provided with protrusions (2011) extending radially outward;
a support portion (302) is provided on a side of the cutter locking member (301) toward a pot opening of the pot body (100), and at least a part of the support portion (302) extends radially inward and beyond an edge of the locking cavity (3011);
in response to a first state, the cutter locking member (301) is pressed on an external portion of a pot bottom (1011) of the pot body (100), the cutter tool (200) is locked on the pot body (100), and the support portion (302) is located above the protrusions (2011); and
in response to a second state, the cutter locking member (301) is disengaged from the pot body (100), the support portion (302) is kept above the protrusions (2011), and a support force of the support portion (302) is greater than or equal to a gravity of the cutter tool (200), such that the support portion (302) is capable of receiving the protrusions (2011) to support the cutter tool (200).

2. The cutter locking structure according to claim 1, wherein a radially inward extending length of the support portion (302) is between 0.2 cm and 0.5 cm.

3. The cutter locking structure according to claim 2, wherein the support force of the support portion (302) is 20-40% greater than the gravity of the cutter tool (200).

4. The cutter locking structure according to claim 1, wherein there are a plurality of the protrusions (2011), and the plurality of the protrusions (2011) are circumferentially spaced apart; and
the support portion (302) comprises a plurality of circumferentially spaced-apart support arms (3021); and each protrusion (2011) corresponds to the support arm (3021).

5. The cutter locking structure according to claim 1, wherein there are a plurality of the protrusions (2011), and the plurality of the protrusions (2011) are circumferentially spaced apart;
the side of the cutter locking member (301) toward the pot opening is provided with a mounting groove (3012), and a sidewall of the mounting groove (3012) toward the locking cavity (3011) is provided with a plurality of notches (3013);
the support portion (302) is configured as a support ring (3022) provided in the mounting groove (3012); the support ring (3022) is provided with a plurality of circumferentially spaced-apart support arms (3021); the support arms (3021) each extend radially inward through a corresponding one of the notches (3013) and beyond the edge of the locking cavity (3011); and each protrusion (2011) corresponds to the support arm (3021); and
preferably, an extending length of the notch (3013) along a circumferential direction of the cutter locking member (301) is greater than or equal to an extending length of the support arm (3021) along the circumferential direction of the cutter locking member (301).

6. The cutter locking structure according to claim 4 or 5, wherein the support arm (3021) is capable of deforming elastically relative to the cutter locking member (301) along an axial direction of the pot body (100);
preferably, a height of the support arm (3021) decreases gradually along a radially inward extension direction;
still preferably, the support arm (3021) has an alternating gradient stiffness along the radially inward extension direction; and
more preferably, a side of the support arm (3021) close to the cutter locking member (301) has a greater stiffness than that of a side of the support arm (3021) away from the cutter locking member (301).

7. The cutter locking structure according to claim 4 or 5, wherein a plurality of circumferentially spaced-apart locking oblique surfaces (3031) are arranged on an inner wall of the locking cavity (3011); each of the locking oblique surfaces (3031) corresponds to one of the protrusions (2011); and when the cutter locking member (301) is screwed relative to the pot body (100), the locking oblique surface (3031) and the protrusion (2011) are squeezed to each other, such that the cutter locking member (301) is pressed on the external portion of the pot bottom (1011) of the pot body (100), and the cutter tool (200) is locked on the pot body (100); and
at least one of the support arms (3021) corresponds to a spacing between any adjacent ones of the locking oblique surfaces (3031).

8. The cutter locking structure according to claim 4 or 5, wherein the cutter locking structure (300) further comprises a locking ring (303) in the locking cavity (3011), and the locking ring (303) rotates synchronously with the cutter locking member (301);
a plurality of circumferentially spaced-apart locking oblique surfaces (3031) are arranged on an inner wall of the locking ring (303); each of the locking oblique surfaces (3031) corresponds to one of the protrusions (2011); and when the cutter locking member (301) is screwed relative to the pot body (100), the locking oblique surface (3031) and the protrusion (2011) are squeezed to each other, such that the cutter locking member (301) under pushing of the locking ring (303) is pressed on the external portion of the pot bottom (1011) of the pot body (100), and the cutter tool (200) is locked on the pot body (100), thereby locking the cutter tool (200) relative to the pot body (100); and
at least one of the support arms (3021) corresponds to a spacing between any adjacent ones of the locking oblique surfaces (3031).

9. The cutter locking structure according to claim 5, wherein a height of the support ring (3022) is greater than or equal to a height of the mounting groove (3012);
when the cutter locking member (301) is locked relative to the pot body (100), the support ring (3022) comes in close contact with the pot bottom (1011);
preferably, a first rough texture (3023) is provided on the support ring (3022); and/or a second rough texture is provided on the support arm (3021); and
still preferably, a first surface of the support arm (3021) contacting the protrusion (2011) to support the cutter tool (200) is an oblique surface or a flat surface, and a second surface of the support arm (3021) opposite to the first surface is a flat surface or an oblique surface.

10. A food processor, comprising the cutter locking structure according to any one of claims 1 to 9, and further comprising a base (400), wherein the pot body (100) is provided on the base (400); the cutter locking structure (300) is provided on the pot body (100); a motor is provided in the base (400); the motor is configured to drive a blade (203) of the cutter tool (200) to rotate; and at least a part of the cutter locking member (301) extends out of a sidewall of the pot body (100).
